# EUROPEAN PATENT SPECIFICATION

(11) **EP 1 640 411 B1**
(45) Date of publication and mention of the grant of the patent: **02.07.2008**
(21) Application number: 04719588.8
(22) Date of filing: 11.03.2004
(51) Int. Cl.: C08K 5/5313, C09K 21/12

(54) **REACTIVE FLAME RETARDANTS AND FLAME-RETARDED RESIN PRODUCTS**
REAKTIVE FLAMMSCHUTZMITTEL UND FLAMMGESCHÜTZTE HARZPRODUKTE
RETARDATEURS DE FLAMME RÉACTIFS ET PRODUITS RÉSINEUX IGNIFUGÉS

(30) Priority: 12.06.2003 JP 2003167761
(43) Date of publication of application: 29.03.2006
(73) Proprietor: FUJI ELECTRIC HOLDINGS CO., LTD., Kawasaki-shi, Kanagawa 210-0856 (JP); Shigehara, Kiyotaka, Tokyo 166-0003 (JP)
(72) Inventor: KANNO, Toshiyuki, Fuji Electric Adv.Tech. Co., Ltd, Yokosuka-shi, Kanagawa 240-0194 (JP); ONITSUKA, Asuka, Fuji Electric Adv.Tech. Co., Ltd, Yokosuka-shi, Kanagawa 240-0194 (JP); SHIGEHARA, Kiyotaka, Tokyo 166-0003 (JP)
(74) Representative: Beacham, Annabel Rose
(86) International application number: PCT/JP2004/003188
(87) International publication number: WO 2004/111121

(56) References cited:
- WO-A-01/42359
- WO-A1-02/18493
- JP-A- 2001 302 686
- JP-A- 2001 323 268
- JP-A- 2001 328 994
- JP-A- 2002 006 487
- JP-A- 2002 179 887
- JP-A- 2003 201 332
- US-B1- 6 245 880
- US-B1- 6 534 601
- DATABASE WPI Week 200245 Derwent Publications Ltd., London, GB; AN 2002-420558 XP002426380 -& JP 2002 060460 A (YUKIMASAIN KOKKA KAGAKU IINKAI) 26 February 2002 (2002-02-26)
- DATABASE WPI Week 199429 Derwent Publications Ltd., London, GB; AN 1994-239342 XP002426388 -& JP 06 173115 A (NIPPON ESTER CO LTD) 21 June 1994 (1994-06-21)

## Description

### TECHNICAL FIELD

The present invention relates to a flame retardant for use in a resin molded product or the like and a product made of flame-retarded resin obtained with the same. More specifically, the present invention relates to a non-halogen-based flame retardant containing no halogen.

### BACKGROUND ART

Thermoplastic resins such as polyester and polyamide, and thermosetting resins such as epoxy each have excellent moldability, excellent mechanical strength, and excellent electrical characteristics for a general-purpose resin and an engineering plastic, so they have been used in various fields including the fields of electricity and electronics. In addition, products such as those obtained by molding those resins are requested to be flame retardant in terms of safety for the purpose of preventing a fire at a high temperature. For example, the standards such as UL94 have been provided as flame retardancy grades.

It is generally known that the addition of a halogen substance is particularly effective in imparting flame retardancy to such resin material. In view of this, a halogen substance is added to a resin before use. The mechanism of the halogen-based flame retardant is considered to be as follows. A halogenated radical is generated mainly by heat decomposition, and the halogenated radical captures an organic radical serving as a burning source, so a chain reaction of combustion is stopped and high flame retardancy is exerted.

However, a flame retardant containing a large amount of halogen compound may generate dioxin and the like depending on combustion conditions, so there has been a growing demand for reducing the amount of halogen in recent years from the viewpoint of reducing a load to the environment. Therefore, various kinds of non-halogen-based flame retardants each containing no halogen-based compound have been examined.

Inorganic flame retardants such as a metal hydrate and red phosphorus, organophosphorus-based flame retardants such as a phosphoric ester, and the like have been examined as such non-halogen-based flame retardants. However, a metal hydrate such as aluminum hydroxide or magnesium hydroxide does not have a very high flame retardancy imparting effect, so a resin must be blended with a large amount of the metal hydrate. Therefore, the moldability of a resin is apt to deteriorate and the mechanical strength of a molded product to be obtained or the like is apt to reduce, thereby causing a problem in that applications of a usable molded product or the like are limited. In addition, red phosphorus is apt to inhibit electrical characteristics owing to insufficient dispersion, to generate a dangerous gas, to reduce moldability, and to cause bleeding, although it has a high flame retardancy effect.

On the other hand, as a phosphorus-based flame retardant such as a phosphoric ester, for example, JP-A-2002-20394 discloses that a piperazine salt, an acidic phosphoric ester having a phosphorinane structure, or alkylenediamine salt having 1 to 6 carbon atoms, is used as a flame retardant.

In addition, JP-A-2002-80633 discloses a flame retardant for a resin mainly composed of a salt composed of an aromatic phosphoric ester such as monophenyl phosphate or monotolyl phosphate and an aliphatic amine such as piperazine.

Furthermore, JP-A-2002-138096 discloses that a phosphorus-containing phenol compound is used as a flame retardant for providing a flame-retardant epoxy resin which exerts an excellent flame retardancy effect as a halogen-free flame-retardant prescription and which is excellent in physical properties, such as heat resistance and water resistance, of a molded product, and in adhesiveness in application for an electrical laminated plate.

Furthermore, JP-A-05-331179 discloses an organic cyclic phosphorus compound having a bifunctional hydroxyl group particularly useful as a stabilizer for a polymer compound or as a flame retardant.

However, phosphoric ester compounds used in JP-A-2002-20394, JP-A-2002-80633, and JP-A-2002-138096 described above must be blended at high concentrations because of their insufficient flame retardancy.

In addition, none of the compounds has a reactive group in a molecule for reacting with a resin component, so a flame retardant component is apt to migrate in a resin, thereby causing a problem in that the flame retardant component volatilizes at the time of molding to contaminate a die or a flame retardant bleeds out to the surface of the resin.

An organic cyclic phosphorus compound described in JP-A-05-331179 functions as a reactive flame retardant in a resin having a reactive group capable of binding to a hydroxyl group such as an epoxy resin. However, crosslinkage cannot be formed in a resin having no reactive group capable of binding to a hydroxyl group such as a typical olefin resin. In this case as well, a flame retardant component is apt to migrate in a resin, thereby causing a problem in that the flame retardant component volatilizes at the time of molding to contaminate a die or a flame retardant bleeds out to the surface of the resin.

Therefore, an object of the present invention is to provide: a reactive flame retardant which is excellent in flame retardancy and heat resistance when added to a resin in a small amount, can be prevented from bleeding out or the like, and is excellent in the mechanical characteristics, electrical characteristics, dimensional stability, and moldability of a molded product; and a product made of flame-retarded resin.

### DISCLOSURE OF THE INVENTION

That is, according to one aspect of the present invention, there is provided a reactive flame retardant that has reactivity with a resin and binds with the resin by virtue of the reactivity to impart flame retardancy, the reactive flame retardant being characterized by comprising an organic cyclic phosphorus compound having an unsaturated group at an end thereof and represented by the following general formula (I). 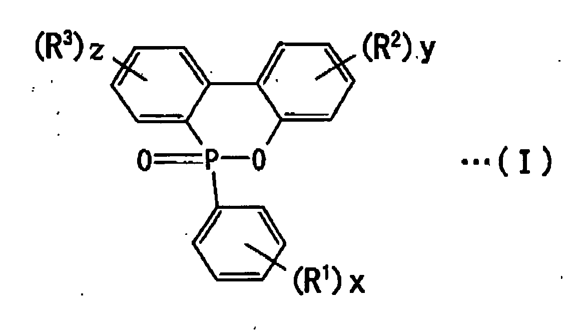 (In the general formula (I): R¹ represents a group selected from -O-R⁴-CP⁵=CH₂, -COO-R⁴-CR⁵=CH₂, -CONH-R⁴-CR⁵=CH₂, -R⁴-CR⁵=CH₂, and -NH-R⁴-CR⁵=CH₂; R⁴ represents an alkylene group having 1 to 5 carbon atoms; R⁵ represents hydrogen or a methyl group; x represents the number of the substituents R¹ and is an integer of 2 to 4; R² and R³ are each selected from a hydrogen atom, a halogen atom, an alkyl group, a cycloalkyl group, an aryl group, an allyl group, and an alkoxyl group; y and z represent the number of the substituents R² and the number of the substituents R³, respectively, and are each an integer of 1 to 4; and R² and R³ may be identical to or different from each other.)

According to the reactive flame retardant of the present invention, an organic cyclic phosphorus compound having at least one unsaturated bond at the end thereof in one molecule is used, so a reaction in which the unsaturated bond at the end binds to a resin by means of heat or a radiation for a reaction can be performed. Thus, since a component of flame retardant can be stably present in the resin, the flame retardant can be prevented from bleeding out and flame retardancy can be imparted for a long time period even when the flame retardant is added in a small amount.

In addition, since the reactive flame retardant contains multiple benzene rings, the molecular weight increases and the reactive flame retardant becomes stable in terms of energy. The heat decomposition temperature increases owing to the foregoing, so the evaporation of the flame retardant at the time of kneading with a resin or molding as well as the decomposition of the flame retardant due to heat or shear at the time of molding can be prevented, thereby moldability is improved. In addition, since the reactive flame retardant contains a large amount or carbon, a so-called char effect is obtained, in which flame retardancy is improved through the generation and deposition of soot at the time of decomposition of a resin.

According to another aspect of the present invention, there is provided a product made of flame-retarded resin obtained by solidifying a resin composition which contains the reactive flame retardant and a resin and then reacting the resin with the reactive flame retardant by heating or irradiation with a radiation, the product made of flame-retarded resin being characterized by comprising 1 to 20 mass% of the reactive flame retardant with respect to an entirety of the product made of flame-retarded resin.

According to the product made of flame-retarded resin of the present invention, since the unsaturated bond at the end of the organic cyclic phosphorus compound is caused to react with the resin by heating or irradiation with a radiation, a component of flame retardant is stably present in the resin. As a result, the flame retardant can be prevented from bleeding out and a flame retardancy effect can be improved. Therefore, flame retardancy can be imparted for a long time period even when the amount of the reactive flame retardant to be added is as small as 1 to 20 mass% with respect to the entirety of the product made of flame-retarded resin.

In addition, through bonding between the flame retardant and the resin, the resin crosslinks to provide a three-dimensional network structure. Therefore, a resin can be molded, so that the resin product obtained can be excellent in all of chemical stability, heat resistance, mechanical characteristics, electrical characteristics, dimensional stability, flame retardancy, and moldability can be obtained. In particular, heat resistance and mechanical strength can be improved. Furthermore, the resin can be molded into a thin shape.

In further aspect of the product made of flame-retarded resin, the resin composition preferably contains two or more kinds of the reactive flame retardants at least one kind of which is multifunctional.

According to this aspect, since the reaction rate accompanied by crosslinking can be in control through combinational use of flame retardants different from each other in reactivity, the contraction, and the like of the resin due to the abrupt advancement of a crosslinking reaction can be prevented. In addition, the incorporation of a multifunctional flame retardant results in the formation of a uniform three-dimensional network structure with the organic cyclic phosphorus compound, so heat resistance and flame retardancy are improved and more stable physical properties of resin are obtained.

In further aspect of the product made of flame-retarded resin, the resin composition preferably further contains a flame retardant other than the aforementioned reactive flame retardant, and the flame retardant other than the aforementioned reactive flame retardant is preferably a cyclic nitrogen-containing compound having at least one unsaturated group at an end thereof.

According to this aspect, with the cyclic nitrogen-containing compound having at least one unsaturated group at the end thereof, bonding between the flame retardant and the resin causes the resin to crosslink to provide a three-dimensional network structure as well. Therefore, while the entire cost of the flame retardants can be reduced owing to the combined use of the flame retardants, a resin can be molded, so that the resin product obtained can be excellent in all of chemical stability, heat resistance, mechanical characteristics, electrical characteristics, dimensional stability, flame retardancy, and moldability can be obtained. In addition, the incorporation of nitrogen additionally improves compatibility with the resin particularly in the case where a polyamide-based resin is used as the resin.

In further aspect of the product made of flame-retarded resin, the resin composition preferably further contains a flame retardant other than the aforementioned reactive flame retardant, and the flame retardant other than the aforementioned reactive flame retardant is preferably an additive-type flame retardant having no reactivity. The combined use of the reactive flame retardant with an additive-type flame retardant having no reactivity such as a phosphoric ester-based, melamine-based, metal hydroxide, or silicon-based flame retardant can additionally improve flame retardancy owing to a synergistic effect as compared to that in the case where the reactive flame retardant is used alone, and can reduce the cost of the flame retardant.

In further aspect of the product made of flame-retarded resin, the resin composition preferably further contains a crosslinking agent having no flame retardancy but having reactivity with the resin, and the crosslinking agent is preferably a multifunctional monomer or oligomer having an unsaturated group at an end of main skeleton thereof.

According to this aspect as well, bonding between the crosslinking agent and the resin causes the resin to crosslink to provide a three-dimensional network structure. Therefore, a resin can be molded, so that the resin product obtained can be excellent in all of chemical stability, heat resistance, mechanical characteristics, electrical characteristics, dimensional stability, flame retardancy, and moldability can be obtained.

In further aspect of the product made of flame-retarded resin, the product made of flame-retarded resin preferably contains 1 to 35 mass% of an inorganic filler with respect to the entirety of the product made of flame-retarded resin. In particular, the product made of flame-retarded resin preferably contains, as the inorganic filler, 1 to 10 mass% of a laminar clay composed of laminating silicate layers with respect to the entirety of the product made of flame-retarded resin. According to this aspect, a resin product, the contraction and decomposition thereof due to crosslinking being suppressed, which is excellent in dimensional stability, can be obtained. In addition, when laminar clay obtained by laminating silicate layers is incorporated as the inorganic filler, the laminar clay is dispersed into the resin in a nano order to form a hybrid structure with the resin. This leads to an improvement in the heat resistance, mechanical strength, and the like, of the product made of flame-retarded resin to be obtained.

In further aspect of the product made of flame-retarded resin, the product made of flame-retarded resin preferably contains 5 to 40 mass% of reinforced fibers with respect to the entirety of the product made of flame-retarded resin. According to this aspect, the incorporation of the reinforced fibers can improve the mechanical strength of the resin product such as tensile strength, compressive strength, bending strength, or impact strength. Furthermore, it can prevent reductions in physical properties due to moisture and temperature.

In further aspect of the product made of flame-retarded resin, the product made of flame-retarded resin is preferably obtained by a reaction between the resin and the reactive flame retardant through irradiation with an electron beam or γ ray at a dose of 10 kGy or more. According to this aspect, after having been solidified by molding or the like, the resin can be crosslinked by a radiation, so a resin product can be produced with high productivity. In addition, at a dose in the above range, uneven formation of a three-dimensional network structure due to an insufficient dose can be prevented as well as bleeding out due to the remaining of an unreacted crosslinking agent. In particular, at an irradiation dose of 10 to 45 kGy, deformation due to the internal strain of the resin product, contraction, and the like, resulting from an oxidation decomposition product generated by an excessive dose, can be prevented as well.

In further aspect of the product made of flame-retarded resin, the product made of flame-retarded resin is also preferably obtained by a reaction between the resin and the reactive flame retardant at a temperature higher than a temperature at which the resin composition is molded by 5°C or higher. According to this aspect, a radiation irradiator or the like is not needed. In particular the product made of flame-retarded resin can be suitably used for a resin composition containing a thermosetting resin.

In further aspect of the product made of flame-retarded resin, the product made of flame-retarded resin is preferably one selected from a molded product, a coating film, and a sealing compound. As described above, the product made of flame-retarded resin of the present invention has excellent flame retardancy and can be prevented from bleeding out. Therefore, in addition to the use as a typical resin molded product, it can be formed into a coating film as a coating agent or the like or can be suitably used as a sealing compound for a semiconductor, a liquid crystal material, or the like.

In further aspect of the product made of flame-retarded resin, the product made of flame-retarded resin is preferably used as an electrical component or an electronic component. As described above, the product made of flame-retarded resin of the present invention is excellent in all of heat resistance, mechanical characteristics, electrical characteristics, dimensional stability, flame retardancy, and moldability, so it can be particularly suitably used as an electrical component or an electronic component in which the above physical properties are particularly stringently demanded.

### BEST MODE FOR CARRYING OUT THE INVENTION

Hereinafter, the present invention will be described in detail. At first, the reactive flame retardant of the present invention will be described.

The reactive flame retardant of the present invention is a reactive flame retardant that has reactivity with a resin and binds with the resin by virtue of the reactivity to impart flame retardancy, and is characterized by containing an organic cyclic phosphorus compound having an unsaturated group at an end thereof and represented by the following general formula (I). 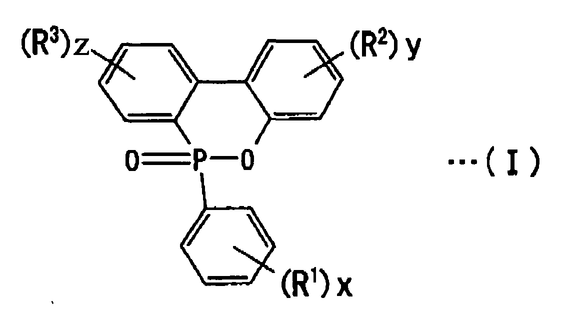 (In the general formula (I): R¹ represents a group selected from -O-R⁴-CR⁵=CH₂, -COO-R⁴-CR⁵=CH₂, -CONH-R⁴-CR⁵=CH₂, -R⁴-CR⁵=CH₂, and -NH-R⁴-CR⁵=CH₂; R⁴ represents an alkylene group having 1 to 5 carbon atoms; R⁵ represents hydrogen or a methyl group; x represents the number of the substituents R¹ and is an integer of 2 to 4; R² and R³ are each selected from a hydrogen atom, a halogen atom, an alkyl group, a cycloalkyl group, an aryl group, an allyl group, and an alkoxyl group; y and z represent the number of the substituents R² and the number of the substituents R³, respectively, and are each an integer of 1 to 4; and R² and R³ may be identical to or different from each other.)

The compound, by introduction of a phenyl group that is an aromatic ring, increases its molecular weight and becomes stable in terms of energy. Since a heat decomposition temperature increases owing to the foregoing, the evaporation of the flame retardant at the time of kneading with a resin or molding as well as the decomposition of the flame retardant due to heat or shear at the time of molding can be prevented, thereby moldability is improved. In addition, since the reactive flame retardant contains a large amount of carbon, a so-called char effect is obtained, in which flame retardancy is improved through the generation and deposition of soot at the time of decomposition of a resin.

Specific examples of the organic cyclic phosphorus compound represented by the general formula (I) include compounds represented by the following structural formulae (I-1) to (I-13).

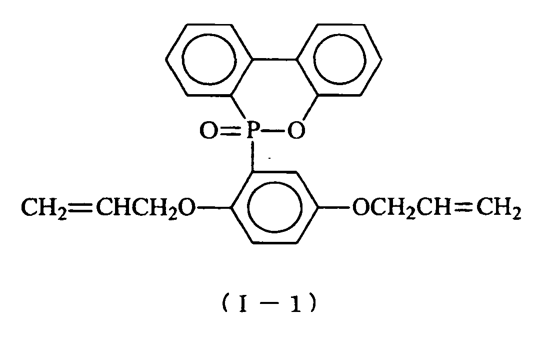

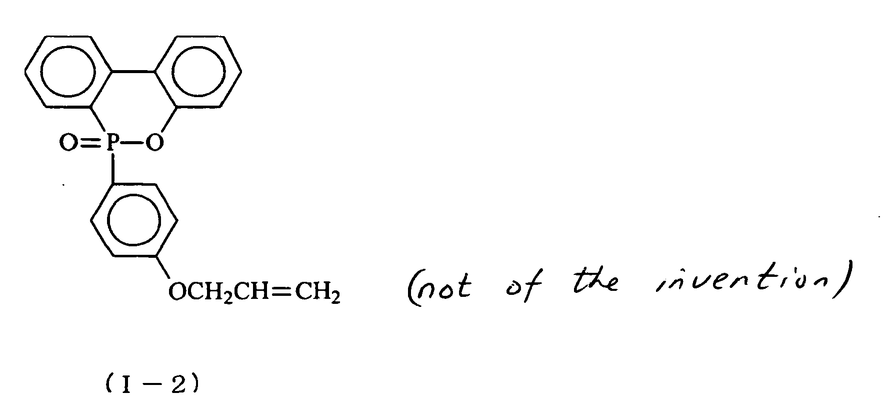

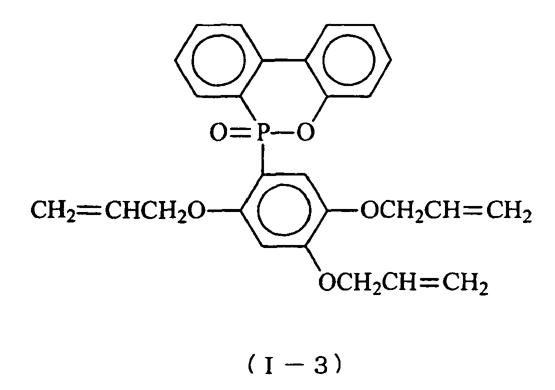

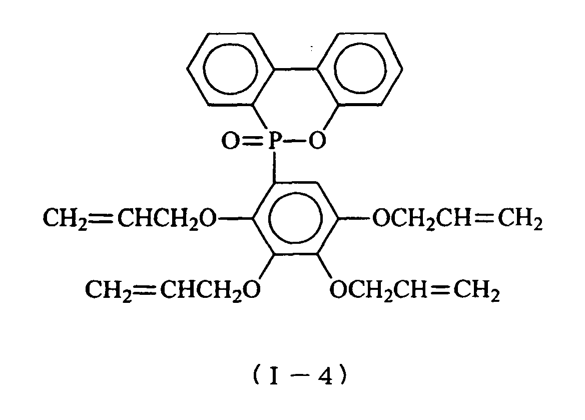

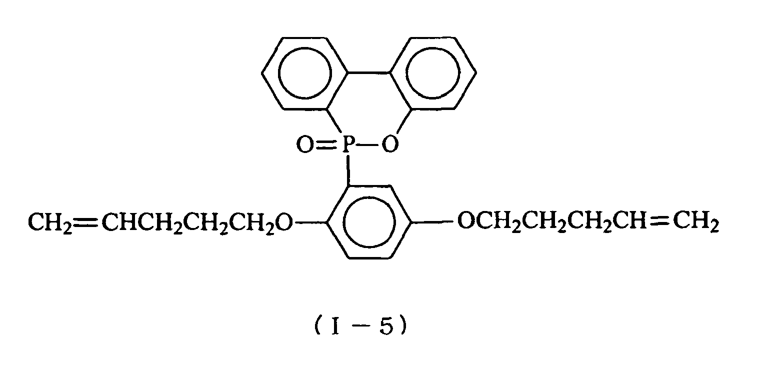

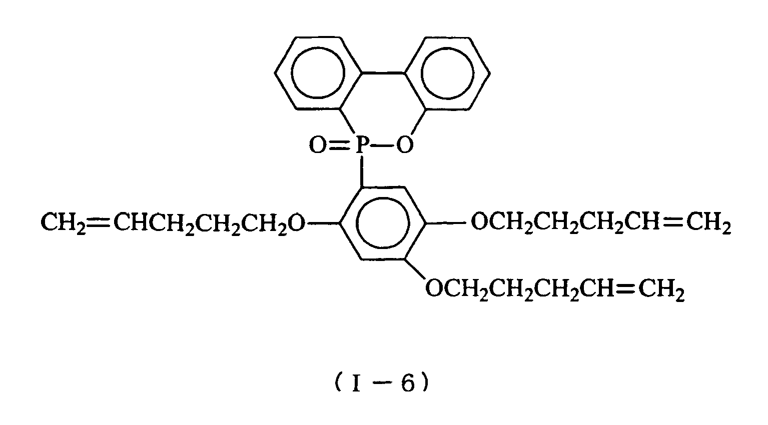

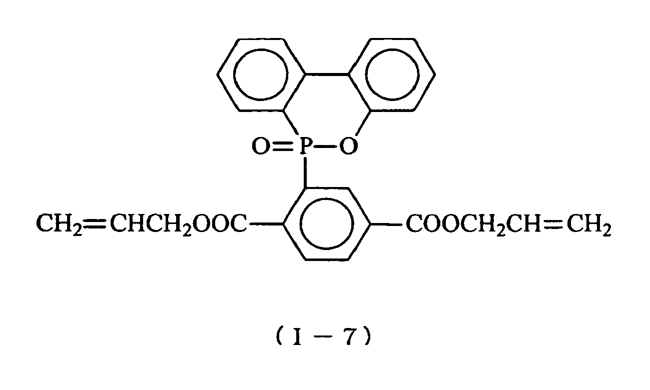

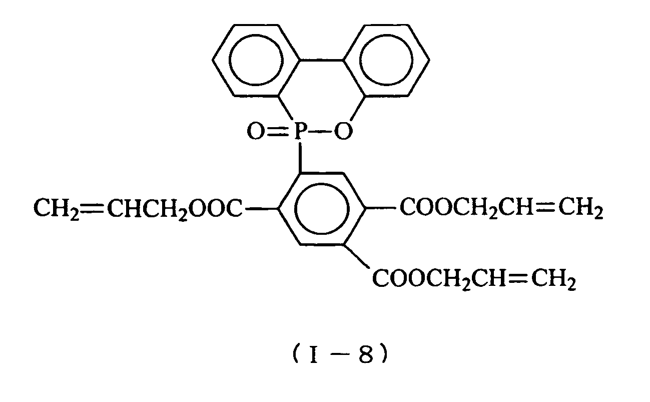

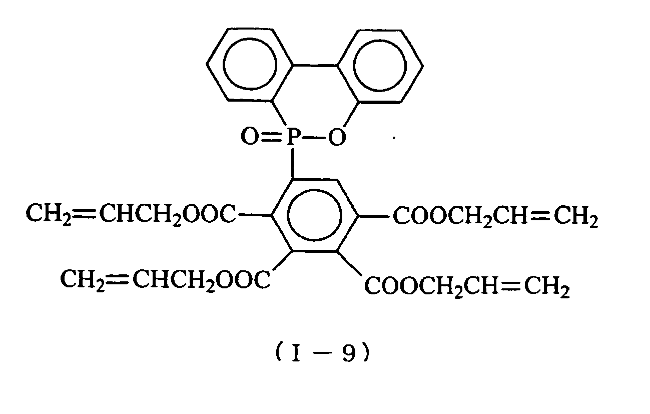

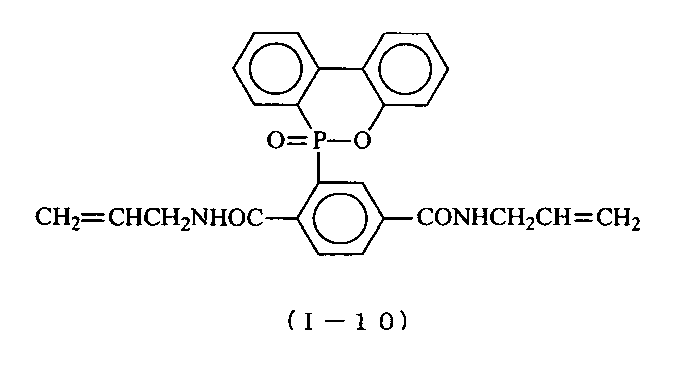

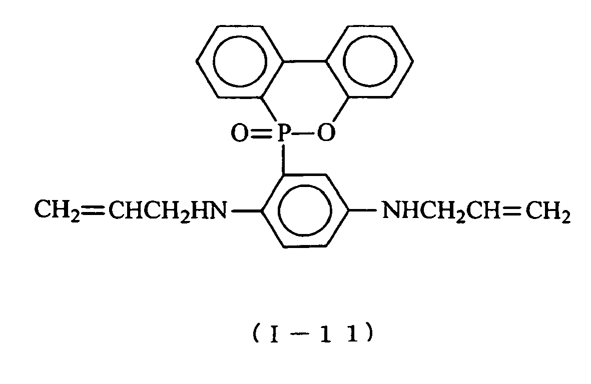

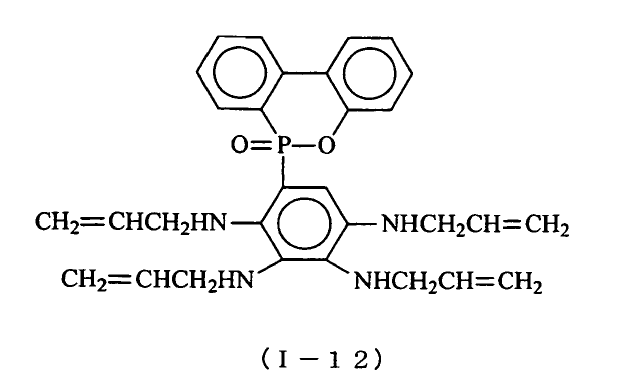

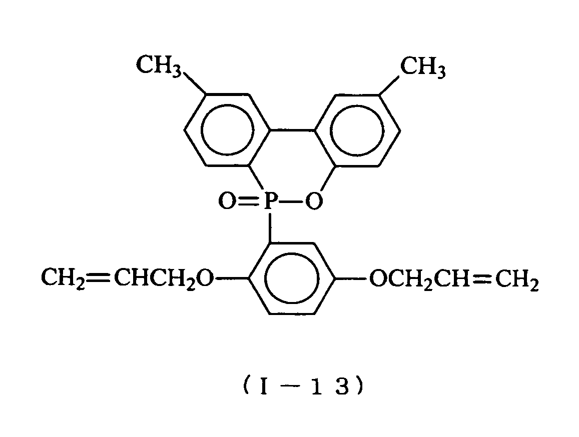

In the above, the substituent R¹ having an unsaturated group at an end thereof is particularly -O-R⁴-CR⁵=CH₂, or particularly preferably -O-CH₂-CH=CH₂. In addition, x is preferably bifunctional to tetrafunctional, or particularly preferably bifunctional. In addition, all R² and R³ are preferably hydrogen atoms.

As for the synthesis of above compounds, for example, the compound represented by the structural formula (I-1) can be synthesized by way of introducing an unsaturated group at an end, in which Compound (II) shown below serving as starting material reacts with an allyl bromide. Compound (II) is conventionally known, and, for example, a commercially available product from Sanko Chemical Co., Ltd. under the trade name of HCA-HQ may be used.

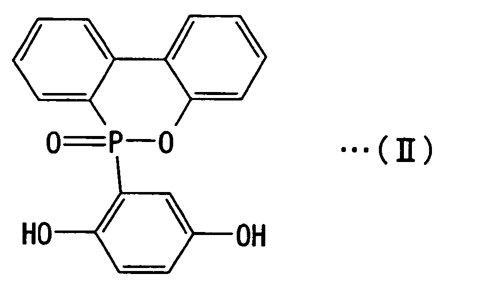

In the present invention, out of the organic cyclic phosphorus compounds represented by the general formula (I), it is preferable to use in combination of two or more kinds of compounds different from each other in reactivity, that is, two or more kinds of compounds different from each other in number of the above functional groups inonemolecule. Since the reaction rate accompanied by cross linking can be in control through the combinational use, the contraction of a resin composition due to the abrupt advancement of a crosslinking reaction can be prevented. Examples of such combination include: the combinational use of a monofunctional compound such as Compound (I-2) described above and a bifunctional or trifunctional compound such as Compound (I-1) or Compound (1-3) described above; and the combinational use of a bifunctional compound such as Compound (I-1) and a tetrafunctional compound such as Compound (I-4).

It is also preferable to incorporate at least a multifunctional reactive flame retardant out of the organic cyclic phosphorus compounds represented by the general formula (I). The incorporation leads to the formation of a uniform three-dimensional network structure by the organic cyclic phosphorus compound.

Next, a product made of flame-retarded resin using any one of the above reactive flame retardants will be described.

The product made of flame-retarded resin of the present invention is obtained by solidifying a resin composition which contains a resin and an organic cyclic phosphorus compound represented by the general formula (I) and then reacting the resin by heating or irradiation with a radiation with the above-described reactive flame retardant, and is characterized by containing 1 to 20 mass% of the reactive flame retardant with respect to the entirety of the resin composition.

Each of a thermoplastic resin and a thermosetting resin can be used without any particular limitation as a resin to be used in the present invention.

Examples of the thermoplastic resin include: a polyamide-based resin; a polyester-based resin such as a polybutylene terephthalate resin or polyethylene terephthalate; a polyacryl-based resin; a polyimide-based resin; a polycarbonate resin; a polyurethane-based resin; a polystyrene-based resin such as polystyrene, an acrylonitrile-styrene copolymer, or an acrylonitrile-butadiene-styrene copolymer; a polyacetal-based resin; a polyolefin-based resin; a polyphenylene oxide resin; a polyphenylene sulfide resin; and a polybutadiene resin. Of those, in terms of mechanical characteristics, heat resistance, and the like, a polyamide-based resin, a polybutylene terephthalate resin, a polyethylene terephthalate resin, a polycarbonate resin, a polyacryl-based resin, a polyacetal-based resin, or a polyphenylene oxide resin is preferably used.

Examples of the thermosetting resin include an epoxy resin, a urethane resin, an unsaturated polyester resin, a phenol resin, a urea resin, a melamine resin, an alkyd resin, and a silicone resin. Of those, in terms of mechanical characteristics, heat resistance, and the like, an epoxy resin, a phenol resin, an unsaturated polyester resin, or a urea resin is preferably used.

The content of the reactive flame retardant is preferably 1 to 20 mass%, or more preferably 1 to 15 mass% with respect to the entirety of the resin composition. When the content of the reactive flame retardant is less than 1 mass%, a crosslinking reaction is insufficient, and the mechanical, thermal, and electrical physical properties of a resin product to be obtained are not preferable. It is not preferable that the content of the reactive flame retardant is in excess of 20 mass%. In such resin product, because the amount of the reactive flame retardant is excessive, an un-reacted monomer of the reactive flame retardant or a cracked gas is generated, an oligomerized product bleeds out, and the mechanical characteristics of a resin product deteriorate.

In the present invention, an additive-type flame retardant having no reactivity other than the above reactive flame retardant may be incorporated. As such flame retardant, a non-halogen-based flame retardant is preferable. Examples of such flame retardant include: metal hydrates typified by aluminum hydroxide and magnesium hydroxide; mono-phosphoric esters such as triphenyl phosphate and tricresyl phosphate; condensed-phosphoric esters such as bisphenol A bis(diphenyl) phosphate and resorcinol bis(diphenyl) phosphate; ammonium polyphosphate; polyphosphoric amide; red phosphorus; guanidine phosphate; derivatives of cyanuric acid or isocyanuric acid; melamine derivatives; and silicon-based flame retardants.

Each of those flame retardants may be used alone, or two or more of them may be used in combination. The content of the flame retardant other than the reactive flame retardant is preferably 1 to 20 mass%, or more preferably 3 to 15 mass% with respect to the entirety of the resin composition in order to avoid bleeding out and reductions in mechanical characteristics.

It is more preferable to incorporate, as a flame retardant having reactivity other than the aforementioned reactive flame retardant, 0.5 to 10 parts by mass of a cyclic nitrogen-containing compound having at least one unsaturated group at the end thereof with respect to 1 part by mass of the aforementioned reactive flame retardant.

Preferable examples of the group having an unsaturated group at the end thereof include a diacrylate, a dimethacrylate, a diallylate, a triacrylate, a trimethacrylate, a triallylate, a tetraacrylate, a tetramethacrylate, and a tetraallylate. Of those, an acrylate such as a diacrylate, a triacrylate, or a tetraacrylate is more preferable in terms of reactivity.

Examples of the cyclic nitrogen-containing compound include an isocyanuric ring and a cyanuric ring.

Specific examples of the cyclic nitrogen-containing compound having at least one unsaturated group at the end thereof include derivatives of the above-described cyanuric acid or isocyanuric acid such as isocyanuric acid EO-modified diacrylate, isocyanuric acid EO-modified triacrylate, and triisocyanuric triacrylate.

In the present invention, a crosslinking agent having no flame retardancy but having reactivity with the resin may be additionally incorporated. A multifunctional monomer or oligomer having an unsaturated group at the end of its main skeleton can be used as such crosslinking agent.

The term "crosslinking agent having no flame retardancy but having reactivity with the resin" as used herein refers to a crosslinking agent which is capable of crosslink (reactivity) but which itself does not have flame retardancy. A reactive flame retardant in such case as the cyclic nitrogen-containing compound having at least one unsaturated group at an end thereof is excluded from the scope of the term, since it brings capability of crosslink together with flame retardancy.

Examples of such crosslinking agent include bifunctional to tetrafunctional compounds represented by the following general formulae (a) to (c) . Here, X represents a main skeleton and R⁶ to R⁹ each represent a functional group having an unsaturated group at the end thereof. The formula (a) represents a bifunctional compound, the formula (b) represents a trifunctional compound, and the formula (c) represents a tetrafunctional compound.

R⁶-X-R⁷ (a)

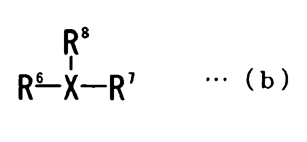

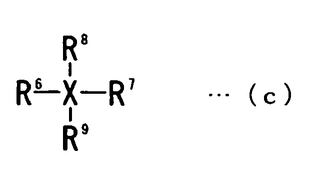

Specific examples thereof include structures represented by the following general formulae in each of which the main skeleton X is an aliphatic alkyl such as a glycerin derivative or a pentaerythritol derivative, an aromatic ring such as trimellitic acid, pyromelliticacid, tetrahydrofuran, ortrimethylenetrioxane, or bisphenol.

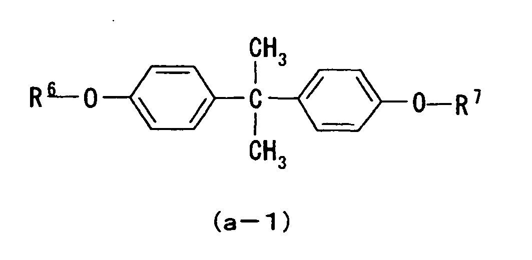

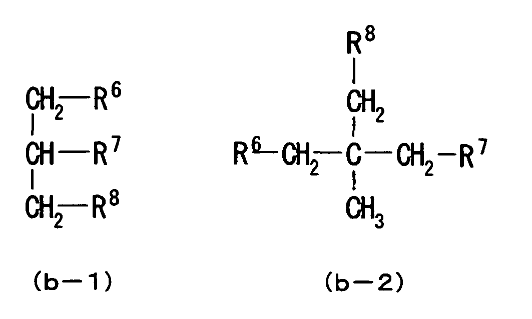

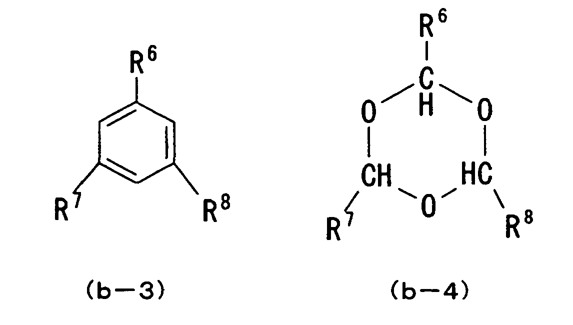

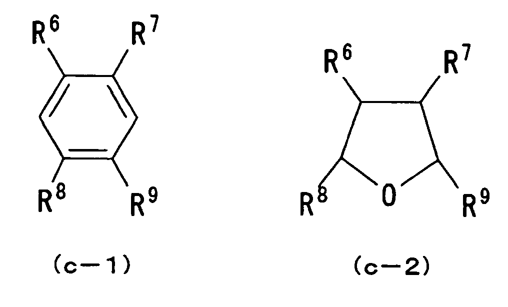

Specific examples of the crosslinking agent include: bifunctional monomers or oligomers such as diacrylates including bisphenol F-EO-modified diacrylate, bisphenol A-EO-modified diacrylate, tripropylene glycol diacrylate, polypropylene glycol diacrylate, polyethylene glycol diacrylate, and pentaerythritol diacrylate monostearate, and dimethacrylates and diallylates thereof;
trifunctional monomers or oligomers such as triacrylates including pentaerythritol triacrylate, trimethylolpropane triacrylate, trimethylolpropane PO-modified triacrylate, and trimethylolpropane EO-modified triacrylate, and trimethacrylates and triallylates thereof; and
tetrafunctional monomers or oligomers such as ditrimethylolpropane tetraacrylate and pentaerythritol tetraacrylate.

The crosslinking agent is obtained by causing one kind selected from allyl bromide, allyl alcohol, allylamine, methallyl bromide, methallyl alcohol, methallylamine, and the like, which serves as a functional group having an unsaturated group at an end thereof, to react with one kind selected from trimellitic acid, pyromellitic acid, tetrahydrofuran tetracarboxylic acid, 1,3,5-trihydroxybenzene, glycerin, pentaerythritol, 2,4,6-tris(chloromethyl)-1,3,5-trioxane, and the like, which serves as the main skeleton X.

The content of the crosslinking agent is preferably 0.5 to 10 parts bymass with respect to 1 part bymass of the flame retardant (s) that is(are) reactive.

The resin composition to be used in the present invention may contain an inorganic filler, reinforced fibers, various additives, or the like in addition to the above resin and flame retardant.

The incorporation of an inorganic filler improves the mechanical strength and dimensional stability of the resin product. In addition, the inorganic filler serves as a base substance for adsorbing a reactive flame retardant to uniformize the dispersion of the reactive flame retardant.

Any conventionally known inorganic filler can be used, and representative examples thereof include: metal powders of copper, iron, nickel, zinc, tin, stainless steel, aluminum, gold, silver, and the like; fumed silica; aluminum silicate; calcium silicate; silicic acid; water-containing calcium silicate; water-containing aluminum silicate; glass beads; carbon black; a quartz powder; isinglass; talc; mica; clay; titanium oxide; iron oxide; zinc oxide; calcium carbonate; magnesium carbonate; magnesium oxide; calcium oxide; magnesium sulfate; potassium titanate; and diatomaceous earth. Each of those inorganic fillers may be used alone, or two or more of them may be used in combination. In addition, each of those inorganic fillers may be treated with a conventionally known surface treatment agent.

The content of the inorganic filler is preferably 1 to 35 mass%, or more preferably 1 to 20 mass% with respect to the entirety of the product made of flame-retarded resin. A content of less than 1 mass% is not preferable because the mechanical strength and dimensional stability of the product made of flame-retarded resin are insufficient, and the adsorption of the reactive flame retardant is insufficient. A content in excess of 35 mass% is not preferable because the product made of flame-retarded resin becomes brittle.

Of the above inorganic fillers, a laminar clay composed of laminating silicate layers is particularly preferably used. Here, the term "laminar clay composed of laminating silicate layers" refers to a clay having a structure in which silicate layers each having a thickness of about 1 nm and a length of one side of about 100 nm are laminated. Accordingly, the laminar clay is dispersed into the resin in a nano order to form a hybrid structure with the resin. As a result, the heat resistance, mechanical strength, and the like of the product made of flame-retarded resin to be obtained are improved. The average particle size of the laminar clay is preferably 100 nm or less.

Examples of the laminar clay include montmorillonite, kaolinite, and mica. Of those, montmorillonite is preferable because of its excellent dispersibility. The surface of the laminar clay may be treated for improving dispersibility into a resin. Such laminar clay may be a commercially available one, and, for example, "Nanomer" (trade name, manufactured by NISSHOIWAI BENTONITE) or "Somasif" (trade name, manufactured by Co-op Chemical) can be used.

The content of the laminar clay is preferably 1 to 10 mass% with respect to the entirety of the product made of flame-retarded resin. The laminar clay may be used alone, or may be used in combination with another inorganic filler.

The incorporation of the reinforced fibers can improve the mechanical strength and dimensional stability of, for example, a molded product. Examples of the reinforced fibers include glass fibers, carbon fibers, and metal fibers. Glass fibers are preferably used in terms of strength and adhesiveness with the resin or with the inorganic filler. One kind of reinforced fibers may be used alone, or two or more kinds of fibers may be used in combination. The fibers may be treated with a conventionally known surface treatment agent such as a silane coupling agent.

In addition, the surfaces of the glass fibers are preferably treated and then coated with a resin. In this case, adhesiveness with a thermoplastic polymer can be additionally improved.

A conventionally known silane coupling agent can be used as the surface treatment agent, and specific examples thereof include silane coupling agents each having at least one alkoxy group chosen from the group consisting of a methoxy group and an ethoxy group and at least one reactive functional group selected from the group consisting of an amino group, a vinyl group, an acrylic group, a methacrylic group, an epoxy group, a mercapto group, a halogen atom, and an isocyanate group.

The resin for coating is not particularly limited, and examples thereof include a urethane resin and an epoxy resin.

The content of the reinforced fibers is preferably 5 to 40 mass%, or more preferably 10 to 35 mass% with respect to the entirety of the product made of flame-retarded resin. A content of less than 5 mass% is not preferable because the mechanical strength of the product made of flame-retarded resin reduces and the dimensional stability thereof becomes insufficient. A content in excess of 40 mass% is not preferable because it becomes difficult to process the resin.

The total content of the inorganic filler and the reinforced fibers is preferably 65 mass% or less, or more preferably 55 mass% or less with respect to the entirety of the product made of flame-retarded resin. A total content of the inorganic filler and the reinforced fibers in excess of 65 mass% is not preferable because the ratio of a resin component reduces to impair moldability or makes the resin product to be obtained brittle, thereby worsening physical properties.

The resin composition to be used in the present invention may be added with any one of common various addition components other than those described above such as a crystal nucleating agent, a colorant, an antioxidant, a release agent, a plasticizer, a heat stabilizer, a lubricant, and a UV inhibitor to the extent that physical properties such as heat resistance, weatherability, and impact resistance as objects of the present invention are not significantly impaired. In addition, as described below, a UV initiator or the like can be used when the resin and the reactive flame retardant are allowed to react with each other by means of ultraviolet light.

The colorant is not particularly limited, but is preferably one that does not show color fading when irradiated with a radiation to be described below. For example, an inorganic pigment such as blood red, iron black, carbon, or chrome yellow, or a metal complex such as phthalocyanine is preferably used.

The product made of flame-retarded resin of the present invention is obtained by way in which the resin composition is solidified and then the resin is reacted with the reactive flame retardant by way of heating or irradiation with a radiation.

The resin composition is solidified by means of a conventionally known method. For example, in the case of a resin composition containing a thermoplastic resin, the thermoplastic resin and a reactive flame retardant are melted and kneaded to produce a pellet. Then, the pellet can be molded by means of a conventionally known method such as injection molding, extrusion molding, vacuum molding, or inflation molding. The melting and kneading can be performed by means of a typical melting and kneading processing machine such as a monoaxial or biaxial extruder, a Banbury mixer, a kneader, or a mixing roll. A kneading temperature can be appropriately selected depending on the kind of the thermoplastic resin. For example, in the case of a polyamide-based resin, the kneading is preferably performed at 240 to 280°C. Molding conditions can be appropriately set and are not particularly limited. At this stage, crosslinking does not advance at all, so an extra spool portion at the time of molding can be recycled as a thermoplastic resin.

On the other hand, in the case of a thermosetting resin, as in the case of the foregoing, the thermosetting resin and a reactive flame retardant are melted and kneaded to produce a pellet. Then, the pellet can be molded by means of a conventionally known method such as injection molding, compression molding, or transfer molding.

In the case of preparing a coating film, the resin composition may be applied as it is. Alternatively, the resin composition may be appropriately diluted with a solvent or the like to prepare a solution or suspension that can be applied, and the solution or suspension may be dried by means of a conventionally known method to prepare a coating film. A coating method such as roller coating, spraying, immersion, or spin coating can be used for preparing a coating film, and a method to be used is not particularly limited.

In the resin composition, an unsaturated bond at an end of the reactive flame retardant reacts with the resin to prompt a crosslinking reaction as a result of heating or irradiation with a radiation, so a component of flame retardant is stably present in the resin.

When heating is employed as means for reacting the reactive flame retardant and the resin, the resin and the reactive flame retardant are reacted at a temperature higher than the temperature at which the resin is molded by preferably 5 °C or higher, or more preferably 10°C or higher.

When a radiation is used as means for crosslinking, an electron beam, an α ray, a γ ray, an X-ray, ultraviolet light, or the like can be used. The term "radiation" as used herein refers to a radiation in a broad sense, and specifically includes an electromagnetic wave such as an X-ray or ultraviolet light in addition to a particle beam such as an electron beam or an α ray.

The resin composition is preferably irradiated with an electron beam or a Y ray out of the foregoing. A conventionally known electron accelerator or the like can be used for irradiation with an electron beam, and an accelerating energy of 2.5 MeV or more is preferable. Irradiation equipment on the basis of a conventionally known cobalt 60 radiation source or the like can be used for irradiation with a γ ray.

Irradiation equipment on the basis of a conventionally known cobalt 60 radiation source or the like can be used for irradiation with a γ ray. A γ ray is preferable because it has stronger permeability than that of an electron beam, so irradiation can be performed uniformly. However, the γ ray has strong radiation intensity, so the dose of the ray must be controlled in order to avoid excessive irradiation.

The irradiation dose of a radiation is preferably 10 kGy or more, or more preferably 10 to 45 kGy. An irradiation dose in this range provides a resin product excellent in the above physical properties owing to crosslinking. An irradiation dose of less than 10 kGy is not preferable because the formation of a three-dimensional network structure due to crosslinking may be nonuniform and an unreacted crosslinking agent may bleed out. An irradiation dose in excess of 45 kGy is not preferable either because the internal strain of the resin product due to an oxidation decomposition product remains to cause deformation, contraction, and the like.

The product made of flame-retarded resin of the present invention thus produced is excellent in mechanical characteristics, electrical characteristics, dimensional stability, and moldability in addition to heat resistance and flame retardancy basically necessary for a molded product. Therefore, the resin product can be suitably used for an electrical or electronic component where high levels of heat resistance and flame retardancy are required, and for an automobile part or an optical part such as: a member for supporting a contact of an electromagnetic switch, a breaker, or the like; a substrate such as a printed board; a package for an integrated circuit; or a housing for an electrical component.

Specific examples of such electrical or electronic component include: a receiving board; a distribution board; an electromagnetic switch; a breaker; a transformer; an electromagnetic contactor; a circuit protector; a relay; a transformer; various sensors; various motors; and semiconductor devices such as a diode, a transistor, and an integrated circuit.

The resin product can be suitably used for an automobile part such as: a cooling fan; a bumper; a brake cover; an interior part such as a panel; a sliding part; a sensor; or a motor.

The resin product can be used not only as a molded product but also as a flame-retardant coating film for the molded product, fiber, or the like.

In addition, excellent heat resistance and excellent flame retardancy can be imparted when the resin product is used for, for example, sealing, covering, and insulating the above-described electronic or electrical component such as a semiconductor device. That is, for example, the resin composition is sealed to cure the resin, and the above-described reaction by heating or irradiation with a radiation is performed, whereby the resin product can be used as a flame-retardant sealing compound for sealing an electronic component or an electrical element such as a semiconductor chip or a ceramic capacitor. Sealing can be performed by means of casting, potting, transfer molding, injection molding, compression molding, or the like. An electronic or electrical component to be sealed is not particularly limited, and examples thereof include a liquid crystal, an integrated circuit, a transistor, a thyristor, a diode, and a capacitor.

As described above, according to the present invention, there can be provided: a non-halogen-based reactive flame retardant which is excellent in flame retardancy when added to a resin in a small amount and can be prevented from bleeding out or the like; and a product made of flame-retarded resin obtained with the same. Therefore, the product made of flame-retarded resin can find use in applications including: resin molded products such as an electrical component and an electronic component; sealing compounds for a semiconductor and the like; and coating films.

Hereinafter, the present invention will be described in more detail by way of examples. However, the present invention is not limited to the examples.

### Synthesis Example 1

40.44g (0.1mol) of a dihydroxy body as a raw material (Compound (II) described above) and 7.0 g (0.05 mol) of fine powder-like anhydrous K₂CO₃ were fed, and 300 ml of dimethylacetamide subjected to a dehydration treatment (pretreatment + distillation under reduced pressure) were added to the mixture. Nitrogen was caused to flow into the resultant, and then mild stirring was started.

60 g (0.5 mol) of allyl bromide were added to the resultant, and then the temperature of a furnace was increased to 80°C to react the whole for 12 hours. At that time, after the temperature had reached 80°C, 3.5 g (0.025 mol) of anhydrous K₂CO₃ fine powder were intermittently added every 0.5 hour for a period of 3 hours. After the temperature had been cooled to room temperature, a solid was filtered out, and excessive allyl bromide and most of an excessive solvent were sequentially recovered through an operation of concentration under reduced pressure. A viscous solution was charged into ice water being vigorously stirred to yield precipitates . The precipitates were collected by filtration, washed with water, and dried under reduced pressure to obtain Compound (I-1) described above.

Values obtained by the elemental analysis of the compound (C: 71.29, H: 5. 10, P: 7.67, O: 15. 84) coincided with a calculated element ratio of Compound (I-1) . The structure of Compound (I-1) described above was also identified by the measurements of a TOF-Mass spectrum and NMR.

### Example 1

62.8 parts bymass of 6, 6 nylon (manufactured by UBE INDUSTRIES, LTD.: 2020B) as a thermoplastic resin, 22 parts by mass of glass fibers with their surfaces treated with a silane coupling agent each having a fiber length of about 3 mm (manufactured by Asahi Fiber-Glass Co., Ltd.: 03.JAFT2Ak25) as reinforced fibers, 1 part by mass of carbon black as a colorant, and 0.2 part by mass of an antioxidant (manufactured by Ciba Geigy: Irganox 1010) were added, and the whole was blended with 5 parts by mass of calcium carbonate as an inorganic filler and 9 parts by mass of Compound (I-1) described above as a reactive flame retardant. The mixture was kneaded by means of a side-flow type biaxial extruder (manufactured by Japan Steel Works, LTD.) at 280°C to produce a resin pellet, and then the pellet was dried at 105°C for 4 hours. After that, the pellet was molded by means of an injection molding machine (manufactured by FUNUC: α50C) under conditions including a resin temperature of 280°C and a die temperature of 80°C.

After that, the molded product was irradiated with 25 kGy of a Y ray from cobalt 60 as a radiation source to produce a resin product of Example 1.

### Example 2

64.8 parts by mass of 6, 6 nylon (manufacturedby UBE INDUSTRIES, LTD.: 2020B) as a thermoplastic resin were added with 5 parts by mass of talc of about 2 µm in diameter as an inorganic filler, 1 part by mass of carbon black as a colorant, 5 parts by mass of Compound (I-1) described above (a bifunctional compound) and 3 parts by mass of Compound (I-3) described above (a trifunctional compound) as reactive flame retardants, and 0.2 part by mass of an antioxidant (manufactured by Ciba Geigy: Irganox 1010), and the whole was mixed. Then, by means of a side-flow type biaxial extruder set at 280°C, 21 parts by mass of glass fibers with their surfaces treated with a silane coupling agent each having a fiber length of about 3 mm (manufactured by Asahi Fiber-Glass Co., Ltd.: 03.JAFT2Ak25) as reinforced fibers were mixed into a mixed resin system molten from a side through extrusion kneading to produce a compound pellet composed of the resin composition of this composition. After that, the pellet was dried at 105°C for 4 hours.

A molded product for use in electrical and electronic components and in automobiles was molded by means of an injection molding machine (manufactured by FUNUC: α50C) under general conditions including a cylinder temperature of 280°C, a die temperature of 80°C, an injection pressure of 78.4 MPa, an injection speed of 120 mm/s, and a cooling time of 15 seconds.

After that, the molded product was irradiated with 35 kGy of a Y ray from cobalt 60 as a radiation source to produce a resin product of Example 2.

### Example 3

The same amounts of an inorganic filler, glass fibers, a colorant, and an antioxidant as those of Example 2 were added to produce a resin product of Example 3 except that 61.8 parts by mass of 6,6 nylon (manufactured by UBE INDUSTRIES, LTD.: 2020B) were used as a thermoplastic resin, 6 parts by mass of Compound (I-1) described above (a bifunctional compound) as a reactive flame retardant, 3 parts by mass of a non-reactive organophosphorus-based flame retardant (manufactured by Sanko Chemical Co., Ltd.: EPOCLEAN), and 2 parts by mass of a multifunctional cyclic compound (manufactured by Nippon Kasei Chemical Co., Ltd.: TAIC) were used.

### Example 4

92 parts by mass of a polybutylene terephthalate resin (manufactured by Toray Industries, Inc.: TORAYCON 1401X06) as a thermoplastic resin and 8 parts by mass of the compound of Synthesis Example 1 (represented by the structural formula (I -1)) as a flame retardant were kneaded at a kneading temperature of 245°C to produce a resin compound pellet, and then the pellet was dried at 130°C for 3 hours. A molded product was molded under the same conditions as those of Example 2 except that the cylinder temperature in the condition at the time of molding was changed to 250°C.

After that, the molded product was irradiated with an electron beam at an irradiation dose of 40 kGy at an accelerating voltage of 4.8 MeV by means of an accelerator manufactured by Sumitomo Heavy Industries, Ltd. to produce a resin product of Example 4.

### Example 5

A resin product of Example 5 was produced according to the same formulation as that of Example 1 and under the same conditions as those of Example 1 except that 6 parts by mass of Compound (I-1) described above (a bifunctional compound) and 3 parts by mass of trifunctional isocyanuric acid EO-modified triacrylate (manufactured by TOAGOSEI CO., LTD. : M-315) were used in combination as the flame retardants of Example 1.

### Example 6

A molded product was molded under the same conditions as those of Example 5 except that 2 parts by mass of a heat catalyst (manufactured by NOF CORPORATION: Nofmer BC) were additionally added to the system of Example 1.

After that, the molded product was reacted by heating at 245°C for 8 hours to produce a resin product of Example 6.

### Example 7

A molded product was molded under the same conditions as those of Example 2 except that 7 parts by mass of a UV initiator (Irganox 651 and Irganox 369manufacturedbyCiba Geigywere used in combination at a ratio of 2 : 1) were added to the system of Example 3.

After that, the molded product was irradiated with light with an illuminance of 150 mW/cm² at a wavelength of 365 nm by means of an ultra-high pressure mercury lamp for 2 minutes to produce a resin product of Example 7.

### Example 8

5 parts by mass of Compound (I-1) described above as a reactive flame retardant were added to a system obtained by dispersing 47 parts by mass of silica into 48 parts by mass of a thermosetting epoxy-based mold resin (manufactured by Nagase Chemical Co., Ltd., base compound XNR4012:100, curing agent XNH4012:50, accelerating agent FD400:1) to produce a mold molded product. After that, the molded product was reacted at 100°C for 1 hour to produce a resin product of Example 8 (a sealing compound).

### Example 9

5 parts by mass of Compound (I-1) described above as a reactive flame retardant were added to 96 parts by mass of an epoxy resin available for sealing a semiconductor (manufactured by Shin-Etsu Chemical Co., Ltd.: SEMICOAT 115) to produce a mold molded product. After that, the molded product was reacted at 150°C for 4 hours to produce a resin product of Example 9 (a sealing compound).

### Example 10

5 parts by mass of Compound (I-3) described above (a reactive flame retardant) and 40 parts by mass of bifunctional isocyanuric acid EO-modified triacrylate (manufactured by TOAGOSEI CO., LTD.: M-215) as flame retardants, 30 parts by mass of trimethylolpropane triacrylate, 10 parts by mass of a monofunctional monomer (manufactured by TOAGOSEI CO., LTD.: M-120), 5 parts by mass of calcium carbonate as an inorganic filler, 2 parts by mass of copper cyanine blue as a colorant, 3 parts by mass of titanium oxide, and 5 parts by mass of a UV initiator (Irganox 651 and Irganox 184 manufactured by Ciba Geigy were used in combination at a ratio of 2 : 1) were dispersed by means of a sand mill to prepare a coating. A coating film was produced by means of a roll coater and cured by means of an ultraviolet lamp (an ultra-high pressure mercury lamp: manufactured by USHIO INC.) to produce a resin product of Example 10 (a coating film) having a thickness of 3 µm.

### Comparative Examples 1 to 10

Resin products of Comparative Examples 1 to 10 were produced in the same manners as in Examples 1 to 10 except that the organic cyclic phosphorus compound represented by the general formula (I) was not blended in Examples 1 to 10.

### Comparative Example 11

A resin product of Comparative Example 11 was produced under the same conditions as those of Example 3 except that only 16 parts by mass of a non-reactive organophosphorus-based flame retardant (manufactured by Sanko Chemical Co., Ltd.: EPOCLEAN) were added as the flame retardant in Example 3.

### Test examples

For each of the resin products of Examples 1 to 9 and Comparative Examples 1 to 9 and 11, a test piece (measuring 5 inches long by 1/2 inch wide by 3.2 mm thick) in conformance with UL-94 as a flame retardancy test and a glow-wire test piece (60 mm square, having a thickness of 1.6 mm) in conformance with an IEC60695-2 method (GWFI) were created, and the test pieces were subjected to a UL 94 test, a glow-wire test (in conformance with IEC), and a solder heat resistance test. In addition, all the resin products were subjected to a bleed out test at 300°C for 3 hours. For each of the coating films of Example 10 and Comparative Example 10, a test piece (measuring 5 inches long by 1/2 inch wide) in conformance with UL-94 was created and evaluated for flame retardancy through a horizontal firing test. Table 1 collectively shows the results.

In the UL 94 test, a test piece was vertically mounted and in contact with the flame of a Bunsen burner for 10 seconds to record a burning time. After being extinguished, the test piece was in contact with the flame for 10 seconds again to record a burning time. The total of the burning times, a glowing time after the second extinguishment, and the presence or absence of a dropped product for igniting cotton were used for determination.

In addition, the glow-wire test was performed by using a nichrome wire of 4 mm in diameter (composed of 80% of nickel and 20% of chromium) as a glow-wire that is bent to prevent its tip from splitting and a type K (Chromel-Alumel) of 0.5 mm in diameter as a thermo couple for measurement of temperature at a thermocouple pressing load of 1.0 ± 0.2 N and a temperature of 850°C. The measurement, in which a burning time after contact for 30 seconds is 30 seconds or less and in which tissue paper below a sample fails to ignite, was used as determination criteria of combustibility (GWFI). In the solder heat resistance test, a rate of change in dimensions after immersion in a bath of molten solder at 350°C for 10 seconds was shown.

**Table 1**

| | Flame retardancy (UL-94) | Kindler to reach clamp | Ignition of absorbent cotton due to dropped product | Glow-wire test | Bleed out after 3 hours at 300°C | Rate of change in dimensions in solder heat resistance test (%) |
|---|---|---|---|---|---|---|
| Example 1 | V-0 | Absent | Absent | Passed | Absent | 8 |
| Example 2 | V-0 | Absent | Absent | Passed | Absent | 6 |
| Example 3 | V-0 | Absent | Absent | Passed | Absent | 4 |
| Example 4 | V-0 | Absent | Absent | Passed | Absent | 14 |
| Example 5 | V-0 | Absent | Absent | Passed | Absent | 3 |
| Example 6 | V-0 | Absent | Absent | Passed | Absent | 5 |
| Example 7 | V-0 | Absent | Absent | Passed | Absent | 5 |
| Example 8 | V-0 | Absent | Absent | Passed | Absent | 5 |
| Example 9 | V-0 | Absent | Absent | Passed | Absent | 15 |
| Example 10 | Passed | - | - | - | Absent | - |
| Comparative example 1 | HB | Present | Present | Failed | Absent | Deformed* |
| Comparative example 2 | HB | Present | Present | Failed | Absent | Deformed* |
| Comparative example 3 | HB | Present | Present | Failed | Absent | Deformed* |
| Comparative example 4 | HB | Present | Present | Failed | Absent | Deformed* |
| Comparative example 5 | HB | Present | Present | Failed | Absent | 35 |
| Comparative example 6 | HB | Present | Present | Failed | Absent | Deformed* |
| Comparative example 7 | HB | Present | Present | Failed | Absent | Deformed* |
| Comparative example 8 | HB | Present | Present | Failed | Absent | Deformed* |
| Comparative example 9 | HB | Present | Present | Failed | Absent | Deformed* |
| Comparative example 10 | Failed | - | - | - | Absent | - |
| Comparative example 11 | V-2 | Absent | Present | Passed | Present | Deformed* |

| | | | | | | |
|---|---|---|---|---|---|---|
| Deformed*: Deformed immediately after immersion | | | | | | |

As can be seen from the results shown in Table 1, each of all the resin products of Examples had flame retardancy of V-0 (that is, each resin product was excellent in flame retardancy) and passed the glow-wire test. Furthermore, in each of all the resin products of Examples, a rate of change in dimensions after the solder heat resistance test was as small as 15% or less. In addition, a flame retardant was not observed to bleed out even after 3 hours at 300°C.

On the other hand, each of all the resin products of Comparative Examples 1 to 9 not containing any reactive flame retardant had flame retardancy of HB (that is, insufficient flame retardancy) and failed the glow-wire test. Furthermore, the resin product of Comparative Example 3 had a rate of change in dimensions after the solder heat resistance test of 15%, the resin product of Comparative Example 5 had a rate of change in dimensions after the solder heat resistance test of 35%, and a resin product of any other comparative example deformed immediately after immersion. This shows that those resin products are inferior to those of Examples. In addition, the resin product of Comparative Example 11 using a non-reactive organophosphorus-based flame retardant as a flame retardant had flame retardancy of V-2 (that is, insufficient flame retardancy), and was observed to bleed out after 3 hours at 300°C.

### INDUSTRIAL APPLICABILITY

The present invention can be suitably used as a non-halogen-based flame retardant and a non-halogen-based product made of flame-retarded resin each containing no halogen, and is capable of finding use in applications including: resin molded products such as an electrical component and an electronic component; sealing compounds for a semiconductor and the like; and coating films.

## Claims

1. A reactive flame retardant that has reactivity with a resin and binds with the resin by virtue of the reactivity to impart flame retardancy, the reactive flame retardant being **characterized by** comprising an organic cyclic phosphorus compound having an unsaturated group at an end thereof and represented by the following general formula (I). 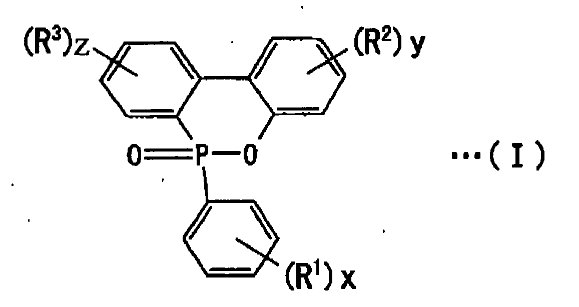 (In the general formula (I): R¹ represents a group selected from -O-R⁴-CR⁵=CH₂, -COO-R⁴-CR⁵=CH₂, -CONH-R⁴-CR⁵=CH₂, -R⁴-CR⁵=CH₂, and -NH-R⁴-CR⁵=CH₂; R⁴ represents an alkylene group having 1 to 5 carbon atoms; R⁵ represents hydrogen or a methyl group; x represents the number of the substituents R¹ and is an integer of 2 to 4; R² and R³ are each selected from a hydrogen atom, a halogen atom, an alkyl group, a cycloalkyl group, an aryl group, an allyl group, and an alkoxyl group; y and z represent the number of the substituents R² and the number of the substituents R³, respectively, and are each an integer of 1 to 4; and R² and R³ may be identical to or different from each other.)

2. A product made of flame-retarded resin obtained by solidifying a resin composition which contains the reactive flame retardant according to claim 1 and a resin and then reacting the resin with the reactive flame retardant by heating or irradiation with a radiation, the product made of flame-retarded resin being **characterized by** comprising 1 to 20 mass% of the reactive flame retardant with respect to an entirety of the product made of flame-retarded resin.

3. A product made of flame-retarded resin according to claim 2, wherein the resin composition contains two or more kinds of the reactive flame retardants at least one of which is multifunctional.

4. A product made of flame-retarded resin according to claim 2 or 3, wherein:
the resin composition further contains a flame retardant other than the reactive flame retardant; and
the flame retardant other than the reactive flame retardant comprises a cyclic nitrogen-containing compound having at least one unsaturated group at an end thereof.

5. A product made of flame-retarded resin according to any one of claims 2 to 4, wherein:
the resin composition further contains a flame retardant other than the reactive flame retardant; and
the flame retardant other than the reactive flame retardant comprises an additive-type flame retardant having no reactivity.

6. A product made of flame-retarded resin according to any one of claims 2 to 5, wherein:
the resin composition further contains a crosslinking agent having no flame retardancy but having reactivity with the resin; and
the crosslinking agent comprises a multifunctional monomer or oligomer having an unsaturated group at an end of main skeleton thereof.

7. A product made of flame-retarded resin according to any one of claims 2 to 6, which comprises 1 to 35 mass% of an inorganic filler with respect to the entirety of the product made of flame-retarded resin.

8. A product made of flame-retarded resin according to claim 7, which comprises, as the inorganic filler, 1 to 10 mass% of a laminar clay composed of laminating silicate layers with respect to the entirety of the product made of flame-retarded resin.

9. A product made of flame-retarded resin according to any one of claims 2 to 8, which comprises 5 to 40 mass% of reinforced fibers with respect to the entirety of the product made of flame-retarded resin.

10. A product made of flame-retarded resin according to any one of claims 2 to 9, which is obtained by a reaction between the resin and the reactive flame retardant through irradiation with an electron beam or Y ray at a dose of 10 kGy or more.

11. A product made of flame-retarded resin according to any one of claims 2 to 9, which is obtained by a reaction between the resin and the reactive flame retardant at a temperature higher than a temperature at which the resin composition is molded by 5°C or higher.

12. A product made of flame-retarded resin according to any one of claims 2 to 11, which is one selected from a molded product, a coating film, and a sealing compound.

13. A product made of flame-retarded resin according to any one of claims 2 to 12, which is used as an electrical component or an electronic component.

## Patentansprüche

1. Reaktives Flammschutzmittel, welches eine Reaktivität mit einem Harz aufweist und aufgrund der Reaktivität an das Harz bindet, um eine Flammschutzeigenschaft zu verleihen, wobei das reaktive Flammschutzmittel **dadurch gekennzeichnet ist, dass** es eine organische cyclische Phosphorverbindung umfasst, die eine ungesättigte Gruppe an einem Ende davon aufweist und durch die folgende allgemeine Formel (I) wiedergegeben wird 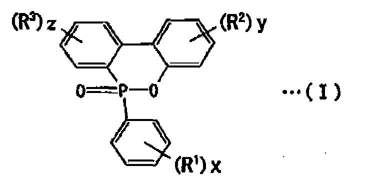 wobei in der allgemeinen Formel (I): R¹ eine Gruppe ausgewählt aus -O-R⁴-CR⁵=CH₂, -COO-R⁴-CR⁵=CH₂, -CONH-R⁴-CR⁵=CH₂, -R⁴-CR⁵=CH₂ und -NH-R⁴-CR⁵=CH₂ bedeutet; R⁴ eine Alkylengruppe mit 1 bis 5 Kohlenstoffatomen bedeutet; R⁵ Wasserstoff oder eine Methylgruppe bedeutet; x die Anzahl der Substituenten R¹ bedeutet und eine ganze Zahl von 2 bis 4 ist; R² und R³ jeweils ausgewählt sind aus einem Wasserstoffatom, einem Halogenatom, einer Alkylgruppe, einer Cycloalkylgruppe, einer Arylgruppe, einer Allylgruppe und einer Alkoxygruppe; y und z die Anzahl der Substituenten R² bzw. die Anzahl der Substituenten R³ bedeuten und jeweils eine ganze Zahl von 1 bis 4 sind; und R² und R³ identisch oder voneinander verschieden sein können.

2. Produkt aus einem flammgeschützten Harz, das durch Verfestigen einer Harzzusammensetzung, die das reaktive Flammschutzmittel nach Anspruch 1 und ein Harz enthält, und anschließend Umsetzen des Harzes mit dem reaktiven Flammschutzmittel durch Erwärmen oder Bestrahlen mit einer Strahlung erhalten wird, wobei das Produkt aus einem flammgeschützten Harz **dadurch gekennzeichnet ist, dass** es 1 bis 20 Massenprozent des reaktiven Flammschutzmittels, bezogen auf die Gesamtheit des Produkts aus einem flammgeschützten Harz, umfasst.

3. Produkt aus einem flammgeschützten Harz nach Anspruch 2, wobei die Harzzusammensetzung zwei oder mehr Arten der reaktiven Flammschutzmittel enthält, von denen wenigstens eines polyfunktionell ist.

4. Produkt aus einem flammgeschützten Harz nach Anspruch 2 oder 3, wobei:
die Harzzusammensetzung außerdem ein Flammschutzmittel enthält, das von dem reaktiven Flammschutzmittel verschieden ist; und
das Flammschutzmittel, das von dem reaktiven Flammschutzmittel verschieden ist, eine cyclische stickstoffhaltige Verbindung umfasst, die wenigstens eine ungesättigte Gruppe an einem Ende davon aufweist.

5. Produkt aus einem flammgeschützten Harz nach einem der Ansprüche 2 bis 4, wobei:
die Harzzusammensetzung außerdem ein Flammschutzmittel enthält, das von dem reaktiven Flammschutzmittel verschieden ist; und
das Flammschutzmittel, das von dem reaktiven Flammschutzmittel verschieden ist, ein Flammschutzmittel vom Additiv-Typ umfasst, das keine Reaktivität aufweist.

6. Produkt aus einem flammgeschützten Harz nach einem der Ansprüche 2 bis 5, wobei:
die Harzzusammensetzung außerdem ein Vernetzungsmittel enthält, das keine Flammschutzeigenschaft aufweist, aber eine Reaktivität mit dem Harz aufweist; und
das Vernetzungsmittel ein polyfunktionelles Monomer oder Oligomer umfasst, das eine ungesättigte Gruppe an einem Ende der Hauptkette davon aufweist.

7. Produkt aus einem flammgeschützten Harz nach einem der Ansprüche 2 bis 6, welches 1 bis 35 Massenprozent eines anorganischen Füllstoffs, bezogen auf die Gesamtheit des Produkts aus einem flammgeschützten Harz, umfasst.

8. Produkt aus einem flammgeschützten Harz nach Anspruch 7. welches als den anorganischen Füllstoff 1 bis 10 Massenprozent eines Schichttons, der aus schichtbildenden Silicatschichten zusammengesetzt ist (laminar clay composed of laminating silicate layers), bezogen auf die Gesamtheit des Produkts aus einem flammgeschützten Harz, umfasst.

9. Produkt aus einem flammgeschützten Harz nach einem der Ansprüche 2 bis 8, welches 5 bis 40 Massenprozent verstärkende Fasern (reinforced fibers), bezogen auf die Gesamtheit des Produkts aus einem flammgeschützten Harz, umfasst.

10. Produkt aus einem flammgeschützten Harz nach einem der Ansprüche 2 bis 9, welches durch eine Reaktion zwischen dem Harz und dem reaktiven Flammschutzmittel durch Bestrahlung mit einem Elektronenstrahl oder γ-Strahlen in einer Dosis von 10 kGy oder mehr erhalten wird.

11. Produkt aus einem flammgeschützten Harz nach einem der Ansprüche 2 bis 9, welches durch eine Reaktion zwischen dem Harz und dem reaktiven Flammschutzmittel bei einer Temperatur erhalten wird, die um 5 °C oder mehr höher ist als eine Temperatur, bei der die Harzzusammensetzung geformt wird.

12. Produkt aus einem flammgeschützten Harz nach einem der Ansprüche 2 bis 11, welches ein Produkt ist, das ausgewählt ist aus einem geformten Produkt bzw. Formteil, einem Beschichtungsfilm und einem Dichtungsmaterial.

13. Produkt aus einem flammgeschützten Harz nach einem der Ansprüche 2 bis 12, welches als eine elektrische Komponente oder eine elektronische Komponente verwendet wird.

## Revendications

1. Retardateur de flamme réactif qui a une réactivité avec une résine et se lie avec la résine en raison de la réactivité pour conférer une ininflammabilité, le retardateur de flamme réactif étant **caractérisé par le fait qu'**il comprend un composé de phosphore cyclique organique ayant un groupe insaturé au niveau d'une de ses extrémités et représenté par la formule générale (I) suivante. 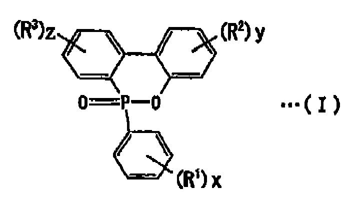 (Dans la formule générale (I) : R¹ représente un groupe choisi parmi -O-R⁴-CR⁵=CH₂. -COO-R⁴-CR⁵=CH₂, -CONH-R⁴-CR⁵=CH₂, -R⁴-CR⁵=CH₂ et -NH-R⁴-CR⁵CH₂; R⁴ représente un groupe alkylène comportant de 1 à 5 atomes de carbone ; R⁵ représente un atome d'hydrogène ou un groupe méthyle ; x représente le nombre des substituants R¹ et est un entier de 2 à 4 ; R² et R³ sont chacun choisis parmi un atome d'hydrogène, un atome d'halogène, un groupe alkyle, un groupe cycloalkyle, un groupe aryle, un groupe allyle, et un groupe alcoxyle ; y et z représentent le nombre des substituants R² et le nombre des substituants R³, respectivement, et sont chacun un entier de 1 à 4 ; et R² et R³ peuvent être identiques ou différents l'un de l'autre.)

2. Produit constitué d'une résine ignifugée obtenu par solidification d'une composition de résine qui contient le retardateur de flamme réactif selon la revendication 1 et une résine puis en faisant réagir la résine avec le retardateur de flamme réactif par chauffage ou irradiation avec un rayonnement, le produit constitué de résine ignifugée étant **caractérisé par le fait qu'**il comprend 1 à 20 % en masse du retardateur de flamme réactif par rapport à une intégralité du produit constitué de la résine ignifugée.

3. Produit constitué d'une résine ignifugée selon la revendication 2, dans lequel la composition de résine contient deux types ou plus des retardateurs de flamme réactifs dont au moins un est multifonctionnel.

4. Produit constitué d'une résine ignifugée selon la revendication 2 ou 3, dans lequel :
la composition de résine contient en outre un retardateur de flamme autre que le retardateur de flamme réactif ; et
le retardateur de flamme autre que le retardateur de flamme réactif comprend un composé contenant de l'azote cyclique ayant au moins un groupe insaturé au niveau d'une de ses extrémités.

5. Produit constitué d'une résine ignifugée selon l'une quelconque des revendications 2 à 4, dans lequel :
la composition de résine contient en outre un retardateur de flamme autre que le retardateur de flamme réactif ; et
le retardateur de flamme autre que le retardateur de flamme réactif comprend un retardateur de flamme de type additif n'ayant aucune réactivité.

6. Produit constitué d'une résine ignifugée selon l'une quelconque des revendications 2 à 5, dans lequel :
la composition de résine contient en outre un agent de réticulation n'ayant aucune ininflammabilité, mais ayant une réactivité avec la résine ; et
l'agent de réticulation comprend un monomère ou oligomère multifonctionnel ayant un groupe insaturé au niveau d'une extrémité de son squelette principal.

7. Produit constitué d'une résine ignifugée selon l'une quelconque des revendications 2 à 6, qui comprend 1 à 35 % en masse d'une charge inorganique par rapport à l'intégralité du produit constitué d'une résine ignifugée.

8. Produit constitué d'une résine ignifugée selon la revendication 7, qui comprend, comme charge inorganique, 1 à 10 % en masse d'une argile laminaire composée de la stratification de couches de silicate par rapport à l'intégralité du produit constitué d'une résine ignifugée.

9. Produit constitué d'une résine ignifugée selon l'une quelconque des revendications 2 à 8, qui comprend 5 à 40 % en masse de fibres renforcées par rapport à l'intégralité du produit constitué d'une résine ignifugée.

10. Produit constitué d'une résine ignifugée selon l'une quelconque des revendications 2 à 9, qui est obtenu par une réaction entre la résine et le retardateur de flamme réactif par l'irradiation avec un faisceau électronique ou un rayonnement γ à une dose de 10 kGy ou plus.

11. Produit constitué d'une résine ignifugée selon l'une quelconque des revendications 2 à 9, qui est obtenu par une réaction entre la résine et le retardateur de flamme réactif à une température supérieure à une température à laquelle la composition de résine est moulée de 5 °C ou plus.

12. Produit constitué d'une résine ignifugée selon l'une quelconque des revendications 2 à 11, qui est un produit choisi parmi un produit moulé, un film de revêtement et un composé d'étanchéité.

13. Produit constitué d'une résine ignifugée selon l'une quelconque des revendications 2 à 12, qui est utilisé comme composant électrique ou composant électronique.
